Europäisches Patentamt

(19) European Patent Office

Office européen des brevets

(11) Numéro de publication: **0 249 602**
**B1**

# (12) FASCICULE DE BREVET EUROPÉEN

(45) Date de publication du fascicule du brevet:
28.02.90

(21) Numéro de dépôt: 86906749.6

(22) Date de dépôt: 26.11.86

(86) Numéro de dépôt international:
PCT/CH 86/00164

(87) Numéro de publication international:
WO 87/03669 (18.06.87 Gazette 87/13)

(51) Int. Cl.⁵: F 23 L 1/00, F 23 L 15/00,
F 23 L 7/00, F 23 B 1/26,
F 24 B 1/19, F 24 B 1/00

(54) GARNITURE DE FOYER DE CHEMINEE ET CHEMINEE COMPORTANT UNE TELLE GARNITURE.

(30) Priorité: 06.12.85 FR 8518219

(43) Date de publication de la demande:
23.12.87 Bulletin 87/52

(45) Mention de la délivrance du brevet:
28.02.90 Bulletin 90/09

(84) Etats contractants désignés:
AT BE CH DE FR GB IT LI LU NL SE

(56) Documents cité:
DE-A-3 345 087
FR-A-2 473 156
FR-A-2 515 792
FR-A-2 542 849
US-A-1 465 490
US-A-1 977 651
US-A-4 043 313
US-A-4 213 445

(73) Titulaire: MEUSY, André
6, ruelle du Canal
CH-2926 Boncourt (CH)

(72) Inventeur: MEUSY, André
6, ruelle du Canal
CH-2926 Boncourt (CH)

(74) Mandataire: Nithardt, Roland
CABINET ROLAND NITHARDT Attn: Cabinet MOSER &
CIE Rue Edouard Verdan 15
CH-1400 Yverdon-les-Bains (CH)

## Description

La présente invention concerne une garniture de foyer de cheminée agencée pour activer la combustion dans une cheminée à combustible solide, notamment à bois, dans laquelle le combustible est groupé pour former un brasier dans le foyer, et dans laquelle l'air alimentant la combustion est introduit dans le foyer sous la forme d'une veine. L'invention concerne également une cheminée comportant une telle garniture de foyer.

La combustion des combustibles solides, notamment du bois, provoque le dégagement de produits gazeux dont certains sont combustibles, mais nécessitent une très haute température pour s'allumer. Il en va de même pour certaines particules solides qui sont emportées dans les fumées. Dans les appareils de chauffage classiques, la température du milieu gazeux situé au-dessus du combustible n'est souvent pas assez haute pour provoquer l'inflammation de ces produits, lesquels constituent alors un combustible qui se perd dans l'atmosphère, nuit à l'environnement et représente une perte de rendement énergétique de l'appareil de chauffage. A ce point de vue, les cheminées connues sont particulièrement défavorables, même si elles sont munies d'un dispositif de récupération de chaleur. En effet, un tel dispositif n'augmente pas la température à l'intérieur du foyer; au contraire il contribue généralement à la réduire en prélevant de la chaleur dans le brasier.

Pour éviter cet inconvénient, la demande de brevet FR-A-2 515 792 prévoit, pour une chaudière à bois, un support de combustible comportant une partie centrale pleine, en forme de toit à faible pente, et deux grilles latérales à barreaux inclinés, permettant l'arrivée de l'air de combustion le long de deux côtés du brasier. Toutefois, malgré cette disposition, l'air pénètre quand même dans le brasier sur toute la longueur et il le refroidit, d'autant plus que le combustible tend à se répandre sur les grilles latérales.

La demande de brevet FR-A-2 473 156 décrit une autre façon d'introduire l'air de combustion dans le foyer d'une cheminée et elle représente l'état de la technique le plus proche de la présente invention. Ce foyer comporte un fond métallique non perforé et surélevé, qui fait partie d'un récupérateur de chaleur parcouru par un circuit séparé d'air ou d'eau. L'air de combustion passe sous ce fond, puis devant lui pour être introduit dans le foyer sous forme d'une veine montant entre le bord antérieur du fond et l'ouverture frontale du foyer de la cheminée, pour empêcher l'aspiration de l'air du local dans lequel se trouve la cheminée. Cependant, ce foyer ne permet pas d'obtenir un brasier plus chaud que dans une cheminée classique à fond non perforé, notamment parce que l'air entre en contact avec le brasier sensiblement de la même manière. De plus, le fond du foyer est refroidi par le récupérateur de chaleur.

Le US-A-4 213 445 concerne une garniture métallique de foyer qui applique un procédé du même genre, en introduisant l'air de combustion sous la forme d'une veine transversale sur le devant du brasier, après l'avoir préchauffé sous le brasier.

La présente invention a donc pour but de perfectionner l'état de la technique mentionné ci-dessus, en fournissant un dispositif permettant d'activer la combustion du combustible solide et/ou des produits qui s'en dégagent, au moyen d'un accroissement de la température dans une partie ou dans la totalité du brasier, afin d'obtenir ainsi une combustion aussi totale que possible.

Dans ce but, la présente invention prévoit tout d'abord une garniture de foyer comportant un support métallique de combustible solide pourvu d'un fond sensiblement imperméable aux gaz, et d'éléments de support pour maintenir ce fond à une hauteur déterminée au-dessus d'une amenée d'air débouchant sous lui et pour définir sous ce fond une zone de préchauffage de l'air de combustion, caractérisée en ce que le support métallique de combustible a la forme d'une assiette contenant le brasier et comportant sur tout son pourtour un bord libre situé plus haut que le fond de l'assiette et en ce qu'une ceinture entoure latéralement l'assiette et la zone de préchauffage, cette ceinture étant disposée de manière à définir avec le bord de l'assiette une fente d'introduction d'air s'étendant sur tout le pourtour de l'assiette, de façon que l'air provenant de la zone de préchauffage forme une veine d'air continue sur tout le pourtour du brasier. De préférence, lesdits éléments de support sont des nervures métalliques solidaires de la face inférieure de l'assiette et s'étendant dans la zone de préchauffage de manière à répartir l'air sur la totalité du pourtour de l'assiette.

De préférence, ladite ceinture s'étend vers le haut jusqu'à un niveau plus élevé que le bord de l'assiette et présente en regard de ce bord un profil transversal concave, de manière à diriger en-dessus de l'assiette l'air sortant de la fente d'introduction. Cette ceinture peut comporter des éléments en brique réfractaire.

Ainsi, le principe de fonctionnement d'une garniture de cheminée selon l'invention consiste avant tout en ce que l'air préchauffé est introduit dans le foyer de manière à former un rideau d'air continu et ascendant qui entoure latéralement la totalité du brasier. Les essais effectués par l'inventeur montrent qu'en introduisant l'air nécessaire à la combustion de cette manière, et non pas dans le coeur du brasier comme on le fait traditionnellement par exemple à travers une grille de foyer, on peut obtenir dans le brasier des températures de l'ordre de 1000°C. Ce résultat peut s'expliquer par le fait que le rideau d'air ascendant protège le brasier contre toute circulation parasite d'air qui pourrait le refroidir, et par le fait que le mouvement ascendant du rideau d'air détermine dans le brasier une certaine dépression, qui tend à resserrer vers le haut le rideau d'air et à amener l'air progressivement en contact avec les produits combustibles, sans qu'il y ait d'air excédentaire refroidissant les produits gazeux. En fait, le brasier se trouve plutôt en déficit d'air, ce qui favorise la carbonisation du bois, avec formation d'une grande quantité de braises.

La présente invention concerne également une cheminée comportant une garniture de foyer du type susmentionné. Une telle cheminée est caractérisée en ce qu'elle comporte un circuit d'air de combustion comprenant successivement au moins un conduit d'amenée d'air, la zone de préchauffage de l'air sous l'assiette métallique et la fente d'introduction d'air s'étendant sur tout le pourtour de cette assiette. Cette cheminée peut comporter des moyens de guidage de l'air à proximité de la fente d'introduction d'air, ces moyens étant disposés en regard du bord de l'assiette.

Dans une forme de réalisation avantageuse, utilisant une d'injection d'eau décomposée à haute température, la cheminée comporte un réacteur à eau raccordé à une source d'alimentation en eau équipée de moyens de réglage du débit, ledit réacteur comprenant au moins un conduit tubulaire métallique, disposé dans le foyer de manière à être exposé au rayonnement thermique produit par la combustion, et des buses d'injection raccordées à ce conduit et disposées à proximité du brasier. Un tel réacteur peut comporter au moins un tube de base formant une boucle autour de la partie inférieure du foyer, et un groupe de tubes supérieurs qui comporte des tubes montants, raccordés aux tubes de base, et des tubes descendants raccordés aux buses d'injection. Le tube de base du réacteur est disposé de préférence au-dessus de la ceinture entourant latéralement l'assiette.

Au moyen d'un tel réacteur, on peut introduire de l'eau ou de la vapeur d'eau dans au moins une zone du brasier présentant une température supérieure à 900°C, pour obtenir une décomposition des molécules d'eau. On produit ainsi un phénomène connu dans l'industrie du gaz, pour la fabrication du gaz dit "gaz à l'eau bleu" à partir du coke. Les molécules de vapeur d'eau sont dissociées et se combinent de manière endothermique avec le carbone du combustible, selon les deux réactions suivantes, la réaction I étant la principale:

(I)  $C + H_2O \rightarrow CO + H_2 - 122$ kJ
(II)  $C + 2H_2O \rightarrow CO_2 + 2H_2 - 80$ kJ

Les mélanges gazeux ainsi produits renferment donc principalement de l'hydrogène et de l'oxyde de carbone qui sont combustibles et qui seront complètement brûlés plus haut dans le foyer, lorsqu'ils entrent en contact avec le rideau d'air entourant le brasier. Cette combustion fournit une chaleur très largement supérieure à la chaleur absorbée par les réactions I et II et elle produit des flammes très chaudes dans le coeur du foyer, en dessus du brasier. En plus d'un intense rayonnement thermique, on obtient surtout une combustion très complète des produits gazeux qui se dégagent du bois par vaporisation, ainsi que des hydrocarbures qui ont pu se former en présence de l'hydrogène. De même, les particules solides qui sont emportées par les gaz sont brûlées entièrement. Par conséquent, les gaz sortant du foyer sont parfaitement oxydés, contiennent très peu de suie et ne causent pas de dépôts de goudron.

Comme, on surchauffe ladite vapeur d'eau par exposition au rayonnement thermique du brasier, dans un conduit disposé à l'intérieur du foyer, mais à l'extérieur du rideau d'air, la chaleur absorbée par la vaporisation de l'eau et par les réactions I et II est prélevée hors du brasier. Dès que le feu rayonne suffisamment de chaleur, la partie terminale du conduit de vapeur peut atteindre une température de l'ordre de 900 à 1000° C à laquelle les molécules d'eau sont craquées, si bien qu'on injecte dans ou sur le brasier un mélange gazeux extrêmement inflammable, qui permet notamment de faire brûler un combustible mauvaise qualité.

Pour transmettre à l'air ambiant la chaleur accrue résultant de la combustion, la cheminée peut comporter en dessus du foyer un échangeur de chaleur comprenant une première enveloppe métallique renfermant les gaz de combustion, et une seconde enveloppe formant autour de la première enveloppe un conduit d'air montant ouvert à sa base et à son sommet, la cheminée comportant en outre un manteau extérieur entourant cet échangeur de chaleur et muni d'ouvertures d'entrée et d'ouvertures de sortie d'air. De préférence, le manteau extérieur se trouve à distance de la seconde enveloppe et les ouvertures d'entrée du manteau extérieur s'étendent au moins partiellement en face de la seconde enveloppe. L'échangeur de chaleur peut également comporter, dans sa partie supérieure, une série de tubes métalliques pour le passage des gaz de combustion, le conduit formé entre la première et la seconde enveloppe étant convergent en direction de ces tubes.

La présente invention sera mieux comprise à l'aide de la description de diverses formes de réalisation, donnée ci-dessous à titre d'exemple et en référence aux dessins annexés, dans lesquels:

- La figure 1 est une vue en coupe verticale partielle d'un foyer de cheminée équipé d'une garniture de foyer constituée par une assiette métallique,
- La figure 2 est une vue de la face inférieure de l'assiette de la fig. 1,
- La figure 3 est une vue en coupe verticale analogue à la fig. 1 et représente une autre forme de réalisation,
- La figure 4 est une vue de la face inférieure de l'assiette représentée sur la fig. 3,
- La figure 5 est une vue en coupe verticale partielle d'un foyer de cheminée agencé pour recevoir l'assiette représentée sur la fig. 3,
- La figure 6 est une vue en coupe verticale d'une autre forme de réalisation d'une garniture de cheminée selon l'invention,

5

– La figure 7 est une vue en coupe verticale d'une cheminée selon la présente invention, et
– La figure 8 est une vue frontale de la cheminée de la fig. 7, après enlèvement de son manteau extérieur.

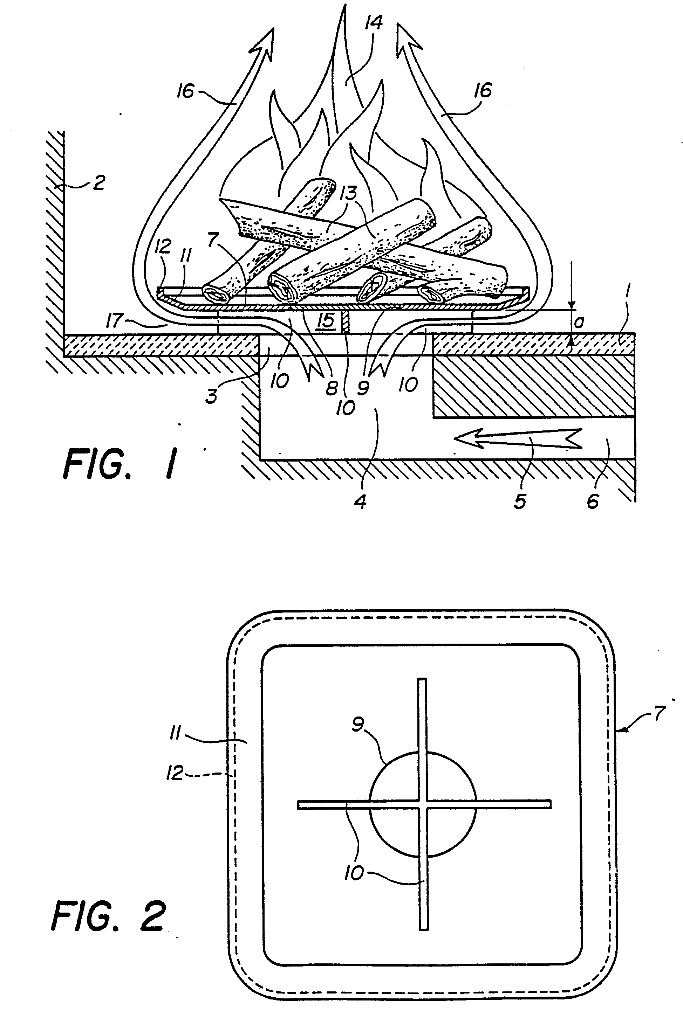

Le foyer de cheminée représenté schématiquement sur la fig. 1 comporte un fond 1 et une paroi arrière 2. Le fond 1 est percé d'une ouverture 3 communiquant avec un cendrier 4. De l'air de combustion 5 est amené vers le cendrier 4 par un conduit d'amenée 6, à partir de la pièce à chauffer ou de l'extérieur du bâtiment, puis cet air se dirige vers le haut vers l'intérieur du foyer. Une assiette métallique 7 en fonte ou en tôle d'acier est disposée à une hauteur déterminée (a) au-dessus du fond 1 du foyer, au-dessus de l'ouverture 3, en regard de laquelle l'assiette 7 comporte une ouverture centrale 9 pour l'évacuation des cendres, cette ouverture étant obturée par un couvercle amovible 8. Comme le montre la fig. 2, la face inférieure de l'assiette 7 est pourvue de quatre nervures 10 qui sont disposées en croix et qui supportent l'assiette en reposant sur le fond 1. D'autre part, le bord de l'assiette présente en coupe transversale un profil concave vers le haut, avec un tronçon incliné 11 et un tronçon vertical 12.

Bien que l'assiette 7 représentée ici présente une forme carrée en plan, elle pourrait également avoir une forme circulaire ou toute autre forme appropriée.

L'assiette 7 constitue une garniture de foyer qui fonctionne comme suit. On dispose le combustible 13, en l'occurence des bûches de bois, sur l'assiette 7 et on l'enflamme. Les flammes ascendantes 14 qui en résultent induisent par tirage naturel un appel d'air qui provoque une légère dépression dans l'intervalle 15 situé entre l'assiette 7 et le fond 1, ainsi que dans le conduit d'amenée 6. L'air frais 5 s'écoulant radialement sous l'assiette 7 est préchauffé au contact de l'assiette et des nervures 10, puis il contourne le bord de l'assiette et forme un rideau continu d'air préchauffé 16 qui entoure les flammes 14 et la zone de combustion située au-dessus de l'assiette.

De cette manière, la zone de combustion est alimentée en air préchauffé sur sa périphérie et elle est protégée contre tout balayage par de l'air froid. Le combustible ainsi que les gaz et les fumées qui s'en dégagent atteignent une température élevée qui favorise à la fois le tirage de la cheminée et une combustion très complète, c'est-a-dire aussi une réduction de la quantité de fumée et de suie. Le rendement de la cheminée s'en trouve accru et il peut être encore amélioré par un échangeur de chaleur disposé en dessus de la zone de combustion. Les flammes des gaz de combustion sont retenues à l'intérieur du rideau d'air, ce qui réduit le dépôt de suie dans le foyer. Dans l'assiette, les braises se trouvent à l'abri du courant d'air et elles restent ainsi très

6

chaudes. On peut obtenir déjà avec une simple assiette de ce type des températures de l'ordre de 1000°C dans le brasier, donc une décomposition de l'eau que renferme un combustible humide. L'hydrogène et l'oxygène ainsi libérés se combinent à nouveau plus haut dans le foyer en produisant des flammes spectaculaires et très chaudes qui contribuent à la combustion des produits gazeux encore imbrûlés.

La forme inclinée du bord 11 de l'assiette 7 définit un passage d'air 17 qui s'élargit à la sortie de la zone de préchauffage 15 et qui évite des tourbillons autour du bord de l'assiette, de manière à obtenir un rideau d'air aussi uniforme que possible.

L'assiette 7 décrite ci-dessus peut aussi être utilisée dans une cheminée dont le fond n'est pas muni d'un conduit d'amenée d'air. On place simplement entre l'assiette 7 et le fond du foyer une pièce métallique complémentaire formant un conduit d'amenée d'air jusque sous le centre de l'assiette. Il faut noter que les garnitures de foyer telles que décrites ci-dessus peuvent être installées très facilement dans une cheminée existante, en vue d'améliorer son rendement. Cette cheminée peut fonctionner soit en foyer fermé, soit en foyer ouvert.

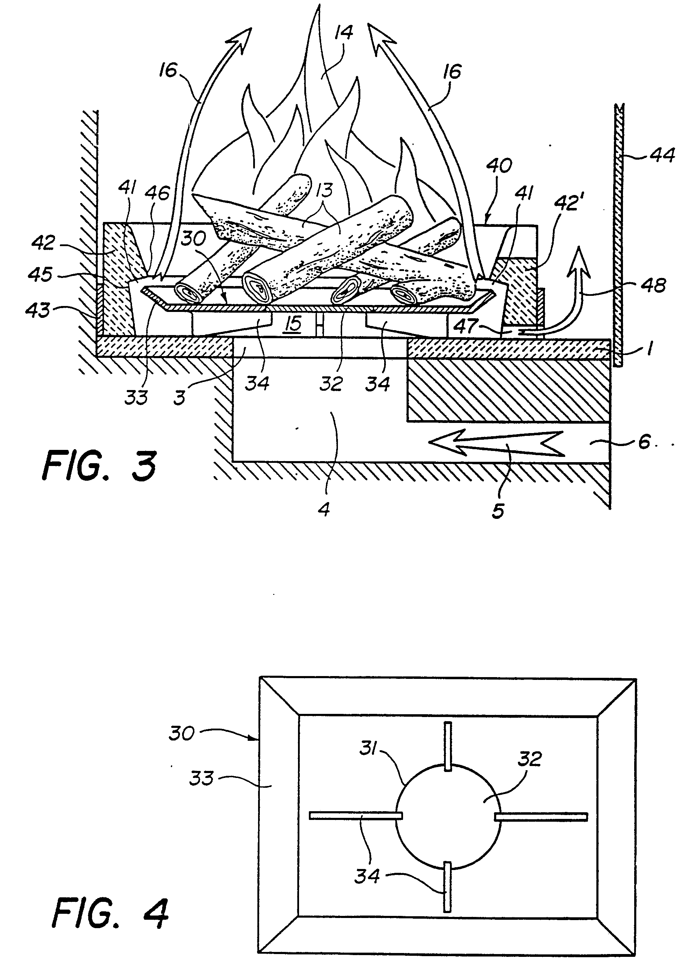

Les figures 3 et 4 montrent une cheminée équipée d'une garniture de foyer comprenant une assiette métallique 30 qui est légèrement différente de l'assiette 7 décrite ci-dessus, mais qui fonctionne de manière semblable. L'assiette 30 est rectangulaire et elle est réalisée de manière très simple en tôle d'acier, avec un fond plat pourvu d'une ouverture centrale 31 obturée par un couvercle 32, et un bord incliné 33. Les nervures 34 soudées sous l'assiette constituent d'une part des éléments de support de l'assiette et du couvercle 32, et d'autre part des surfaces d'échange de chaleur dans la zone de préchauffage 15 de l'air de combustion 5. Elles servent également à répartir l'air sur tout le pourtour de l'assiette.

La garniture de foyer comporte en outre une ceinture 40 qui entoure latéralement l'assiette 30 et qui délimite autour du bord 33 de cette assiette une fente d'injection d'air 41 s'étendant sur tout le pourtour de l'assiette. Dans l'exemple représenté ici, la ceinture 40 est formée par des éléments profilés 42 en matière réfractaire, la stabilité de ces éléments étant assurée par un cadre métallique 43. Cette ceinture est simplement posée sur le fond 1 du foyer. De préférence, elle est appliquée contre la paroi arrière 2 du foyer, tandis qu'elle peut se trouver, le cas échéant, à une certaine distance des parois latérales et d'une porte frontale 44 du foyer.

Comme le montre la fig. 3, les éléments 42 de la ceinture présentent en regard du bord 33 de l'assiette un profil transversal concave, formé ici par un angle rentrant 45. Ce profil a pour effet de diriger au-dessus de l'assiette l'air sortant de la fente d'injection 41. En outre, les éléments 42 présentent un rebord proéminent 46 qui s'étend en dessus du bord de l'assiette de manière à empêcher que des fragments de combustible tombent dans la fente 41.

Le principe de fonctionnement de la garniture de foyer constituée par l'assiette 30 et la ceinture 40 est essentiellement semblable à celui qui a été décrit plus haut pour l'assiette 7, mais la fente d'injection 41 définie par la ceinture 40 permet d'une part de diriger l'air à proximité de la zone de combustion, et d'autre part d'obtenir une répartition tout à fait uniforme du rideau d'air 16 injecté autour de l'assiette, indépendamment des dimensions et des conditions de ventilation du foyer de la cheminée. Bien entendu, l'assiette et la ceinture peuvent avoir en plan une forme qui n'est pas rectangulaire, par exemple une forme trapézoïdale adaptée aux dimensions du foyer de la cheminée.

La figure 3 montre également que la partie antérieure de la ceinture 40, située le long de la porte vitrée 44, est formée par un ou plusieurs éléments réfractaires 42' qui sont plus bas que les autres, afin que le feu soit mieux visible, et qui comportent à leur partie inférieure une ouverture en forme de fente 47 par laquelle un courant d'air 48 peut s'échapper de la zone de préchauffage 15 et balayer les parties basses du foyer situées à l'extérieur de la ceinture 40. On a constaté que ce balayage permet d'éviter la présence de fumée et/ou de tourbillons dans ces zones du foyer.

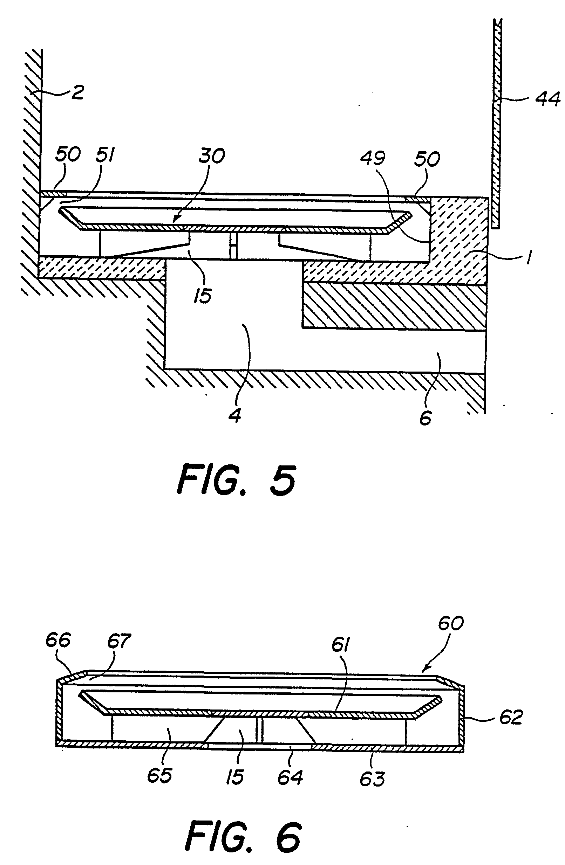

La figure 5 illustre une autre forme de réalisation, dans laquelle le fond 1 du foyer de la cheminée comporte un évidement 49 agencé pour recevoir l'assiette 30 décrite ci-dessus. Sur son pourtour, le bord supérieur de l'évidement 49 est muni d'une ceinture 50 constituée par exemple par un cadre métallique amovible qui surplombe légèrement le bord de l'assiette 30 et qui délimite le long de ce bord une fente d'injection d'air 51. La face inférieure de la ceinture 50 peut avoir une surface inclinée ou incurvée pour diriger l'air au-dessus de l'assiette 30.

La figure 6 montre une forme de réalisation d'une garniture de foyer qui est constituée d'une seule pièce 60 en tôle soudée, comprenant une assiette 61 ayant la même forme que l'assiette 30 décrite plus haut, une ceinture métallique 62 qui entoure latéralement l'assiette 61, et un fond plat 63 qui est pourvu d'une ouverture centrale 64 et qui est fixé au fond de l'assiette 61 par des nervures 65. Ainsi, l'assiette 61 et le fond 63 délimitent une zone de préchauffage 15 de l'air de combustion. En outre, la ceinture 62 est pourvue d'un rebord supérieur incliné 60 qui surplombe le bord de l'assiette et qui délimite la fente d'injection d'air 67. La garniture de foyer 60 peut être utilisée de la même manière que les garnitures représentées sur les figures 1 ou 3, en procurant des avantages semblables.

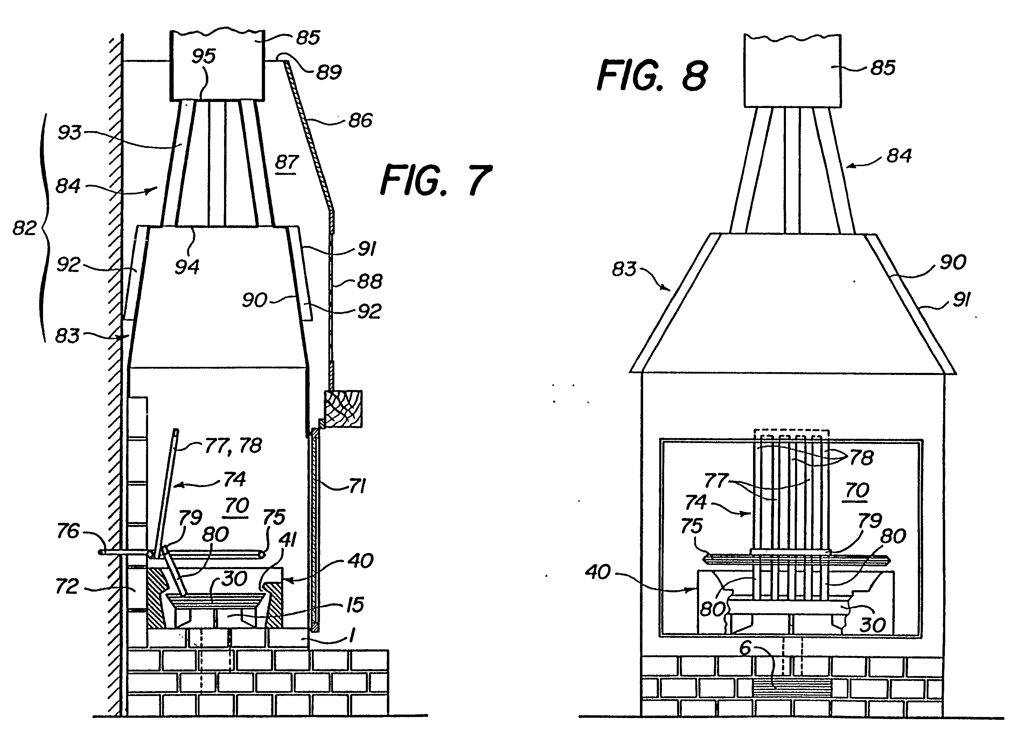

La cheminée représentée sur les figures 7 et 8 comporte un foyer 70 ayant sensiblement la même configuration que celui qui est représenté schématiquement sur la fig. 3. Ce foyer comporte un fond plat 1 sous lequel est ménagé un conduit d'amenée d'air 6 qui renferme un cendrier et qui débouche dans le foyer à travers le fond 1. Le foyer 70 comporte une porte translucide 71, qui s'ouvre en coulissant vers le haut, et une garniture de foyer comprenant l'assiette 30 et la ceinture en matière réfractaire 40 décrites plus haut en référence à la fig. 3. Comme dans les cas précédents, ces éléments définissent une zone de préchauffage de l'air 15 sous l'assiette 30 et une fente 41 d'introduction de l'air sur le pourtour de l'assiette. La ceinture 40 est adossée à un revêtement 72 formant la paroi arrière du foyer 70, tandis qu'elle se trouve à une certaine distance des deux parois latérales du foyer.

En plus de cette garniture déjà décrite, le foyer 70 est équipé d'un réacteur à eau 74 formé par un ensemble en tubes d'acier disposé en dessus de la garniture de foyer. Cet ensemble comprend un tube de base 75 qui forme une boucle rectangulaire au-dessus de la ceinture 40 et dont l'entrée est raccordée, par une petite conduite 76 traversant la paroi arrière du foyer, à une alimentation en eau équipée d'une vanne ou d'un doseur de débit (non représenté). La sortie du tube de base 75 est raccordée à deux tubes supérieurs montants 75 disposés devant la paroi arrière 72 du foyer, les extrémités supérieures de ces tubes étant raccordées par un tube transversal à trois tubes supérieurs descendants 78 parallèles aux tubes 77. Les tubes descendants 78 débouchent dans un collecteur horizontal 79 sur lequel sont branchées plusieurs buses d'injection 80 formées par des tuyaux d'acier comportant chacun un ou plusieurs orifices de sortie dans la zone du brasier, au-dessus de l'assiette 30.

Le fonctionnement du réacteur 74 est le suivant. Lorsque du combustible brûlé sur l'assiette 30, on admet un faible débit d'eau dans le réacteur 74 par la conduite 76, de préférence en établissant un écoulement goutte à goutte par l'organe de réglage. Ce petit débit d'eau est vaporisé très rapidement dans le tube de base 75, puis cette vapeur est surchauffée dans le circuit formé par ce tube et par les tubes supérieurs 77 et 78 exposés à la chaleur produite par le brasier, principalement grâce à son rayonnement thermique. En effet, il faut noter que ces tubes se trouvent entièrement à l'extérieur du rideau d'air ascendant issu de la fente 41. La vapeur circule sous l'effet de son expansion et, une fois arrivée dans les buses 80 qui s'étendent dans une zone très chaude du brasier au-dessus de l'assiette 30, elle atteint une température supérieure à 900°C et se trouve décomposée en un mélange gazeux d'hydrogène et d'oxygène qui est injecté dans le brasier à proximité du combustible. On observe que ceci active considérablement la combustion dans la partie supérieure du brasier et engendre, à l'intérieur du rideau d'air entourant celui-ci, des flammes bleuâtres qui rayonnent beaucoup de chaleur. On obtient ainsi des fumées ayant subi une combustion complète à une température très élevée, et en particulier une oxydation quasi totale au contact du rideau d'air qui les entoure. Dans une cheminée utilisant le procédé selon la présente invention, on a mesuré des teneurs en oxyde de carbone de l'ordre de 0,02 % dans les fumées, ce qui peut être considéré comme extrêmement faible et atteste une combustion complète.

Pour récupérer une quantité importante de chaleur dans ces fumées très chaudes, la cheminée comporte en dessus du foyer 70 un échangeur de chaleur 82 comprenant deux parties superposées, à savoir une hotte 83 convergente vers le haut, et un échangeur tubulaire 84 dont le sommet est raccordé à un conduit d'évacuation des fumées 85. Un manteau extérieur 86 forme l'habillage apparent de la cheminée et délimite autour du foyer et de l'échangeur de chaleur une enceinte 87 dans laquelle l'air ambiant du local peut se chauffer et circuler par convection. Pour cela, le manteau 86 comporte des ouvertures d'entrée latérales (non représentées) au niveau du fond du foyer, une large ouverture frontale 88 recouverte d'une plaque perforée, ainsi qu'une ou plusieurs ouvertures de sortie 89 dans sa partie supérieure.

La hotte 83 comporte une première enveloppe métallique 90 qui renferme les gaz de combustion et soutient la partie supérieure de l'échangeur, et une seconde enveloppe métallique 91 fixée à une certaine distance de la face extérieure de l'enveloppe 90 pour définir un conduit d'air montant 92 ayant une profondeur uniforme, par exemple de 8 centimètres, et une largeur qui se réduit vers le haut. La seconde enveloppe 91 s'étend au moins partiellement en regard de l'ouverture frontale 88 du manteau afin de réduire le rayonnement thermique à travers cette ouverture.

L'échangeur tubulaire 84 est constitué par une couronne de tubes métalliques convergents 93 dont les extrémités sont soudées à deux plaques métalliques respectives 94 et 95 pourvues d'orifices correspondant aux tubes. Les tubes 93 conduisent les fumées de la hotte 83 au conduit d'évacuation 85.

Le fonctionnement de l'échangeur de chaleur 82 ressort clairement des figures 7 et 8. L'air ambiant entrant dans le manteau par les ouvertures d'entrée latérales s'échauffe au contact des parois du foyer et monte jusqu'au niveau de l'échangeur 82, où il se mélange à de l'air entré par l'ouverture frontale 88. Une partie de cet air passe dans le conduit montant 92 et s'échauffe au contact de la première enveloppe 90 très chaude. Cet air est accéléré par la forme convergente du conduit 92 et il est projeté en direction des tubes 93 de l'échangeur tubulaire 84, en entraînant avec lui l'air qui a passé à l'extérieur de la seconde enceinte 91. Ceci crée dans l'échangeur tubulaire 84 une circulation rapide de l'air, accroissant les échanges thermiques.

Grâce à cette construction, la cheminée selon l'invention chauffe le local relativement peu par rayonnement, mais essentiellement par la convection de l'air ambiant. Grâce à la forme particulière de l'échangeur de chaleur, le manteau 86 et la plaque perforée recouvrant son ouverture frontale 88 s'échauffent très peu, ce qui est ressenti comme un gain de confort par rapport aux manteaux traditionnels. A ce sujet, on notera que la seconde enveloppe 91 de la hotte joue un rôle essentiel, l'échangeur tubulaire 84 ne constituant qu'un élément accessoire ayant pour but une élévation du rendement thermique.

Bien que la description qui précède se réfère à des cheminées dans lesquelles on brûle essentiellement du bois, il faut noter que le procédé selon la présente invention est utilisable aussi dans d'autres appareils de chauffage, par exemple un poêle domestique ou une chaudière de chauffage central, et/ou avec d'autres combustibles solides, tels que du charbon ou des produits dérivés, des briquettes à base de lignite ou de déchets de bois ou de papier, etc.

## Revendications

1. Garniture de foyer de cheminée comportant un support métallique de combustible solide pourvu d'un fond sensiblement imperméable aux gaz et d'éléments de support pour maintenir ce fond à une hauteur déterminée au-dessus d'une amenée d'air débouchant sous lui et pour définir sous ce fond une zone de préchauffage (15) de l'air de combustion, caractérisée en ce que le support métallique de combustible a la forme d'une assiette (7, 30, 61) contenant le brasier et comportant sur tout son pourtour un bord libre situé plus haut que le fond de l'assiette et en ce qu'une ceinture (40, 50, 62) entoure latéralement l'assiette et la zone de préchauffage, cette ceinture étant disposée de manière à définir avec le bord de l'assiette une fente d'introduction d'air (41, 51, 67) s'étendant sur tout le pourtour de l'assiette de façon que l'air provenant de la zone de préchauffage (15) forme une veine d'air continue sur tout le pourtour du brasier.

2. Garniture selon la revendication 1, caractérisée en ce que lesdits éléments de support sont des nervures métalliques (10, 34, 65) solidaires de la face inférieure de l'assiette et s'étendant dans ladite zone de préchauffage de manière à répartir l'air sur la totalité du pourtour de l'assiette.

3. Garniture selon la revendication 1, caractérisée en ce que l'assiette (30, 61) et la ceinture (40, 50, 62) ont une forme rectangulaire ou trapézoïdale en plan.

4. Garniture selon la revendication 1, caractérisée en ce que ladite ceinture (40, 67) s'étend vers le haut jusqu'à un niveau plus élevé que le bord de l'assiette et présente en regard de ce bord un profil transversal concave, de manière à diriger en dessus de l'assiette l'air sortant de la fente d'introduction.

5. Cheminée comportant une garniture de foyer selon la revendication 1, caractérisée en ce qu'elle comporte un circuit d'air de combustion comprenant successivement au moins un conduit d'amenée d'air (6), la zone de préchauffage de l'air (15) sous l'assiette métallique, et la fente d'introduction d'air (41, 51) s'étendant sur tout le pourtour de cette assiette.

6. Cheminée selon la revendication 5, caractérisée en ce qu'elle comporte des moyens de guidage (46, 50) de l'air à proximité de la fente d'introduction, ces moyens de guidage étant disposés en regard du bord de l'assiette.

7. Cheminée selon la revendication 5, caractérisée en ce qu'elle comporte un réacteur à eau (74) raccordé à une source d'alimentation en eau équipée de moyens de réglage du débit, ledit réacteur comprenant au moins un conduit tubulaire métallique (75, 77, 78), disposé dans le foyer de manière à être exposé au rayonnement thermique produit par la combustion, et des buses d'injection (80) raccordées à ce conduit et disposées à proximité du brasier.

8. Cheminée selon la revendication 7, caractérisée en ce que ledit réacteur comporte au moins un tube de base (75) formant une boucle autour de la partie inférieure du foyer, et un groupe de tubes supérieurs qui comporte des tubes montants (77), raccordés au tube de base, et des tubes descendants (78) raccordés aux buses d'injection.

9. Cheminée selon la revendication 8, caractérisée en ce que le tube de base (75) du réacteur est disposé au-dessus d'une ceinture (40) entourant latéralement l'assiette.

10. Cheminée selon la revendication 5, caractérisée en ce qu'elle comporte en dessus du foyer un échangeur de chaleur (82) comprenant une première enveloppe métallique (90) renfermant les gaz de combustion, et une seconde enveloppe (91) formant autour de la première enveloppe un conduit d'air montant (92) ouvert à sa base et à son sommet, et en ce qu'elle comporte un manteau extérieur (86) entourant cet échangeur de chaleur et muni d'ouvertures d'entrée et d'ouvertures de sortie d'air.

11. Cheminée selon la revendication 10, caractérisée en ce que le manteau extérieur (86) se trouve à distance de la seconde enveloppe (91) et en ce que les ouvertures d'entrée du manteau extérieur s'étendent au moins partiellement en face de la seconde enveloppe.

12. Cheminée selon la revendication 10, caractérisée en ce que l'échangeur de chaleur comporte, dans sa partie supérieure, une série de tubes métalliques (93) pour le passage des gaz de combustion, et en ce que le conduit (92) formé entre la première et la seconde enveloppe est convergent en direction de ces tubes.

**Patentansprüche**

1. Kamineinsatz, bestehend aus einem metallischen Gestell für Festbrennstoffe, das mit einem für Gase wesentlich undurchlässigen Boden versehen ist, und aus Gestellteilen, um diesen Boden auf einer bestimmten Höhe oberhalb einer Luftzufuhr, die unter dem Boden mündet, zu halten und um unter diesem Boden eine Vorwärmungszone (15) der Verbrennungsluft festzulegen, *dadurch gekennzeichnet*, daß das metallische Gestell für den Brennstoff die Form eines Tellers (7, 30, 61) aufweist, der die Glut enthält, und auf seinem gesamten Umfang einen freien Rand besitzt, der höher als der Boden des Tellers liegt, und daß ein Ring (40, 50, 62) seitlich den Teller und die Vorwärmungszone umschließt, wobei dieser Ring derart angeordnet ist, daß er mit dem Rand des Tellers einen Schlitz für den Lufteinlaß (41, 51, 67) bildet, der sich auf dem gesamten Umfang des Tellers erstreckt, so daß die Luft, die aus der Vorwärmungszone (15) kommt, auf dem gesamten Umfang der Glut eine ununterbrochene Luftströmung bildet.

2. Einsatz gemäß Anspruch 1, *dadurch gekennzeichnet*, daß die besagten Gestellteile metallische Rippen (10, 34, 65) sind, die mit der unteren Seite des Tellers verbunden sind und die sich in die besagte Vorwärmungszone derart erstrecken, um die Luft auf dem gesamten Umfang des Tellers zu verteilen.

3. Einsatz gemäß Anspruch 1, *dadurch gekennzeichnet*, daß der Teller (30, 61) und der Ring (40, 50, 62) in der Draufsicht eine rechteckige oder trapezförmige Gestalt haben.

4. Einsatz gemäß Anspruch 1, *dadurch gekennzeichnet*, daß der besagte Ring (40, 67) sich nach oben bis zu einer höheren Ebene als den Rand des Tellers erstreckt und gegenüber diesem Rand ein hohles Querprofil aufweist, um die Luft aus dem Einlaßschlitz oberhalb des Tellers zu lenken.

5. Kamin mit einem Einsatz gemäß Anspruch 1, *dadurch gekennzeichnet*, daß er einen Kreislauf für Verbrennungsluft mit der Reihe nach mindestens einer Luftzufuhrleitung (6), der Luftvorwärmungszone (15) unter dem metallischen Teller und dem Schlitz für den Lufteinlaß (41, 51), der sich auf den gesamten Umfang dieses Tellers erstreckt, aufweist.

6. Kamin gemäß Anspruch 5, *dadurch gekennzeichnet*, daß er Führungen (46, 50) für die Luft in der Nähe des Schlitzes für den Lufteinlaß enthält, wobei diese Führungen gegenüber dem Rand des Tellers angeordnet sind.

7. Kamin gemäß Anspruch 5, *dadurch gekennzeichnet*, daß er einen Wasserreaktor (74) enthält, der an einer Wasserzulaufleitung angeschlossen ist, die mit Einrichtungen für die Regelung der Durchsatzmenge ausgerüstet ist, wobei der besagte Reaktor mindestens aus einer metallischen rohrförmigen Leitung (75, 77, 78) besteht, die in dem Herd derart angeordnet ist, daß sie der thermischen Ausstrahlung aus der Verbrennung ausgesetzt ist, und aus Einspritzdüsen (80), die an dieser Leitung angeschlossen und in der Nähe der Glut angeordnet sind.

8. Kamin gemäß Anspruch 7, *dadurch gekennzeichnet*, daß der besagte Reaktor aus mindestens einem unteren Rohr (75), das um den unteren Teil des Herdes eine Schleife bildet, und einem Bündel von oberen Röhren besteht, das steigende Röhren (72), die an dem unteren Rohr angeschlossen sind, und fallende Röhren (78), die mit den Einspritzdüsen verbunden sind, enthält.

9. Kamin gemäß Anspruch 8, *dadurch gekennzeichnet*, daß das untere Rohr (75) des Reaktors oberhalb eines Rings (49) angeordnet ist, der den Teller seitlich umschließt.

10. Kamin gemäß Anspruch 5, *dadurch gekennzeichnet*, daß er oberhalb des Herds einen Wärmetauscher (82) enthält, der aus einer ersten metallischen Ummantelung (90), die die Verbrennungsgase enthält, und aus einer zweiten Ummantelung (91), die um die erste Ummantelung eine Leitung für steigende Luft (92) bildet, die im unteren und oberen Bereich offen ist, besteht, und daß er eine äußere Ummantelung (86) enthält, die diesen Wärmetauscher umschließt und mit Öffnungen für Lufteinlaß und Luftauslaß versehen ist.

11. Kamin gemäß Anspruch 10, *dadurch gekennzeichnet*, daß die äußere Ummantelung (86) von der zweiten Ummantelung (91) entfernt angeordnet ist und daß sich die Einlaßöffnungen der äußeren Ummantelung mindestens teilweise gegenüber der zweiten Ummantelung erstrecken.

12. Kamin gemäß Anspruch 10, *dadurch gekennzeichnet*, daß der Wärmetauscher in seinem oberen Teil eine Reihe von metallischen Röhren (93) für die Durchströmung der Verbrennungsgase enthält und daß die Leitung (92), die zwischen der ersteren Ummantelung und der zweiten Ummantelung gebildet ist, in Richtung dieser Röhre konvergent ist.

## Claims

1. Fireplace hearth fitting including a metallic support for solid fuel provided with a substantially gas-impervious bottom and support elements for maintaining this bottom at a given height above an air feed opening thereunder and for defining under said bottom a zone (15) for preheating the combustion air, characterized in that the metallic fuel support has the form of a dish (7, 30, 61) containing the glowing embers and including on the whole periphery thereof a free edge situated higher than the bottom of the dish and in that a belt (40, 50, 62) laterally surrounds the dish and the preheating zone, this belt being disposed in such a manner as to define with the edge of the dish an air admission slit (41, 51, 67) extending over the whole periphery of the dish, so that the air coming from the preheating zone form a continuous air vein on the whole periphery of the glowing embers.

2. Fitting according to claim 1, characterized in that said support elements are metallic ribs (10, 34, 65) solid with the lower face of the dish and extending in said preheating zone in such a manner as to distribute the air over the entire periphery of the dish.

3. Fitting according to claim 1, characterized in that the dish (30, 61) and the belt (40, 50, 62) have a rectangular or trapezoidal form in plan view.

4. Fitting according to claim 1, characterized in that said belt (40, 67) extends upwards to a higher level than the edge of the dish and presents opposite this edge a concave transversal profile, so as to direct above the dish the air coming out of the admission slit.

5. Fireplace including a hearth fitting according to claim 1, characterized in that it includes a combustion-air circuit comprising successively at least one air-supply conduit (6), the air-preheating zone (15) underneath the metallic dish and the air-admission slit (41, 51) extending over the entire periphery of this dish.

6. Fireplace according to claim 5, characterized in that it includes air guide means (46, 50) near the admission slit, these guide means being disposed opposite the edge of the dish.

7. Fireplace according to claim 5, characterized in that it includes a water reactor (74), connected to a water supply source equipped with flow control means, said reactor comprising at least one metallic tubular conduit (75, 77, 78) disposed in the hearth so as to be exposed to the thermal radiation produced by the combustion, and injection nozzles (80) connected to this conduit and disposed near the glowing embers.

8. Fireplace according to claim 5, characterized in that said reactor includes at least one bottom tube (75) forming a loop around the lower part of the hearth, and a group of upper tubes which includes ascending tubes (77) connected to the bottom tube and descending tubes (78) connected to the injection nozzles.

9. Fireplace according to claim 8, characterized in that the bottom tube (75) of the reactor is disposed above a belt (40) laterally surrounding the dish.

10. Fireplace according to claim 5, characterized in that it includes above the hearth a heat exchanger (82) comprising a first metallic jacket (90) enclosing the combustion gases, and a second jacket (91) forming around the first jacket an ascending air conduit (92) open at the bottom and at the top, and in that it includes an outer casing (86) surrounding this heat exchanger and provided with air inlet and outlet openings.

11. Fireplace according to claim 10, characterized in that the outer casing (86) is spaced from the second jacket (91) and in that the inlet openings of the outer casing extend at least partially opposite the second jacket.

12. Fireplace according to claim 10, characterized in that the heat exchanger includes, in its upper part, a set of metallic tubes (93) for passage of the combustion gases, and in that the conduit (92) formed between the first and second jackets is convergent towards these tubes.

FIG. 1

FIG. 2

1

FIG. 3

FIG. 4

FIG. 5

FIG. 6

*FIG. 7*

*FIG. 8*

EP 0 249 602 B1